# EUROPEAN PATENT APPLICATION

(11) **EP 0 803 798 A1**
(43) Date of publication of application: **29.10.1997**
(21) Application number: 97301955.7
(22) Date of filing: 21.03.1997
(51) Int. Cl.: G06F 3/14

(54) **System for use in a computerized imaging system to efficiently transfer graphics information to a graphics subsystem employing masked direct frame buffer access**

(30) Priority: 22.04.1996 US 635805
(71) Applicant: International Business Machines Corporation, Armonk, N.Y. 10504 (US)
(72) Inventor: Bui, Thuy-Linh Tran, Austin, TX 78753 (US); Johns, Charles Ray, Austin, TX 78759 (US); Roberson, John Thomas, Austin, TX 78759 (US); Spannaus, John Fred, Austin, TX 78733 (US)
(74) Representative: Williams, Julian David

(57) **Abstract**

Graphics information is efficiently transferred from a host computer to a graphics subsystem in which rendering and pixel data is generated by the host system. A masked direct frame buffer address operation provides an assist for 3D rendering performed by the system processor of the host and other system resources. Storage of depth, alpha, stencil, and other pixel data is in system memory including one or more ancillary graphics buffers. The main processor of the host system generates pixel data associated with an image. This data is checked against the buffers. As a result of such checking, a mask is generated by the host system. The mask is transferred in burst mode across the host-graphic subsystem PCI bus to the graphics subsystem in combination with pixel data, as a pixel count number, and X,Y address of the first pixel. In the graphics subsystem the mask is employed with the other data to load the frame buffer with the portion of pixel data defined by the mask.

## Description

The present invention relates generally to computer graphics systems and, more particularly, to such systems providing display graphics subsystems requiring efficient transfer of graphics information between the computer main system and graphics subsystem.

In the computer graphics field, many types of graphics systems are utilized. Typically, however, such systems provide for a host computer which performs some of the tasks related to processing of graphics information and a related graphics subsystem typically including a graphics adapter which performs additional functions. The latter may, for example, include arranging the graphics information in a form appropriate for output to graphics output devices which actually display the graphics.

In the development of the art, this division of labor in generating, processing and displaying graphics information between the host computer and the graphics subsystem has taken many forms. Because much depended upon the particular characteristics of the host computer and graphics subsystem, necessary functions might alternatively be provided by either the host computer or the graphics subsystem itself. In one embodiment of a computerized imaging system, this division of labor takes a form in which the main processor(s) of the host computer system performs rendering of pixels and the resulting final pixel data is to be transferred to the graphics subsystem. The graphics subsystem will then, in turn, place appropriate pixels in a frame buffer which is thereafter utilized to generate the graphics image.

In contrast, for purposes of illustration, in other such systems, it is the graphics adapter which may be employed to do the rendering and, of course, the presentation of the graphics information in appropriate format for use by a suitable graphics output device. Although full 3D engines are being provided in graphics adapter cards for example, wherein all processing occurs relative to the graphics on the graphics adapter and it becomes an entire subsystem for performing the specialized graphics functions, these systems are relatively new and expensive - in part because of the requirement for more sophisticated and expensive graphics adapter processors for handling all of the graphics processing, and the additional requirement for sufficient graphics adapter memory. Thus, this solution of offloading all graphics functionality onto a separate subsystem is, as a practical matter, as of yet not a viable solution to providing widespread high quality graphics, but rather is best suited for niche markets wherein the added cost can be justified, such as in engineering workstations or the like.

Yet other reasons exist for alternative solutions to dedicated high function graphics subsystems. Typically in high capability computer systems, excess "silicon" or capacity may be available on central processing units or controller chips for offloading some of the graphics functionality from the graphics subsystem and onto the host computer. In other words, this excess processing capacity not being used by the host computer may thereby be taken advantage of essentially for "free" by implementing graphics functions in the processor or memory controller itself which would otherwise have to be provided for in the dedicated graphics subsystem.

Thus for example, some microprocessor manufacturers have been providing new processor instructions to assist in the increasingly important area of providing better graphics and in assisting in 3D rendering and multimedia functions, such as providing for specific instructions for block moves, etc.

As just described, for higher function graphics like 3D rendering, it is possible to provide dedicated graphics subsystems, including more expensive graphics adapters with additional memory to handle things such as depth (z) buffering, other associated memory for storing alpha planes, additional logic, etc. However, the industry has been seeking to better utilize system resources to thereby reduce the cost of providing higher quality graphics. Thus, instead of requiring more fast video memory in a graphics adapter, for example, there has been some interest in better utilizing main memory and processing of the host computer in the processor complex for storage of depth, alpha, or transparency factors, etc.

However, seeking to utilize more under-used resources of the host computer for graphics and thereby distributing graphics functions between the host computer and graphics adapter are not without their problems. First, problems are created in transferring the increasingly dense graphics information over a bus of limited bandwidth to the graphics subsystem. Also, in this modern age of compartmentalization, where designers may specialize only in graphics adapters or main processor or memory controller design, the necessary integrated systems perspective and skills may be missing which require designers to be equally conversant in main system and graphics subsystem design issues and constraints. Thus, opportunities to capitalize upon unexpected benefits to a distributed graphics design approach may not be readily apparent or easily discernible.

It is nevertheless conventional that in the graphics imaging art, the system or main memory and processor of the host computer are employed to share at least some extent in the graphics processing workload. More particularly, such system memory will typically contain a plurality of ancillary graphics buffers which will contain information necessary to operate on the base graphics data to achieve desired effects on the viewer. For example, these ancillary buffers might include a depth buffer, alpha buffer, stencil buffer, etc., utilized in a manner well known in the art to process the graphics information such that when finally displayed, 3D or depth, various surface characteristics, and the like are perceived by the viewer. With the advent of significantly increased processing power in modern host computers such as workstations and the like, typically excess processing power is available in the main system processors. They are thus ideally suited for performing the incredibly complex and time consuming checking against these buffers before rendering pixels and transmitting them to the graphics subsystem for subsequent display. As previously noted however, depending upon the particular needs of the system, this checking against buffers may alternatively be provided by special graphics assist hardware having the necessary processing power in the graphics adapter processor.

In any case, the important point to note is that as a result of this checking against ancillary graphics buffers, some pixels of a given image may not need to be rendered. As but one simple example, portions of pixels comprising an image in a three-dimensional system may be obscured from the viewer by reason of another object in a plane between the distant object and the viewer. In a display of an eclipse for example, a portion of the pixels associated with the Sun's image might be obscured by the presence of the obstructing moon between the viewer on earth and the sun. It is significant to note that notwithstanding that some pixels may thus not need to be rendered, it may nevertheless be necessary to maintain address information on a per pixel basis, including the addresses of the pixels which may not be rendered. Otherwise, the graphics subsystem would have no way of determining which pixels in a mass of pixels relating to an image need not be rendered as a result of the aforementioned ancillary buffer checking.

It is this need to retain address information on a per pixel basis which gives rise to a serious problem addressed by the subject invention. In a modern high resolution graphics imaging system, an incredible volume of pixel data must be transferred between the host computer and the graphics subsystem. For example, even in what would be considered to be a relatively moderate resolution display in modern terms, a 1280x1024 pixel display screen may be provided, e.g., with 1024 lines of 1280 pixels each, each with their own unique pixel address. Each pixel itself may have associated with it color depth information such as, in high color resolution systems, a 24 bit number. With this sheer volume of graphics data, including a large number of pixels, large number of bits per pixel of pixel data, and large number of unique individual addresses associated with pixel, it will be readily apparent that by offloading some graphics functionality from a dedicated graphics subsystem to a main system, a problem is thereby created in accommodating a limited bandwidth of a bus interconnecting the main system and graphics subsystem. It becomes impractical if not impossible to convey across such a bus, even a modern PCI bus with a "burst" mode, all of the necessary various pixel data, addresses, and various aforementioned ancillary check data necessary for 3D rendering.

Thus, a system was highly desired which could effectively distribute graphics implementation between a host computer and graphics subsystem to enjoy the associated cost advantage of employing excess host capability while at the same time avoiding the necessity of a high-end graphics subsystem with all graphics operations being implemented in the graphics subsystem itself.

Still further, it was desirable to provide for such distributed implementation of graphics while nevertheless addressing the aforementioned problem of bottlenecks associated with bus structures interconnecting the host system and graphics subsystems.

In accordance with the present invention, there is now provided a computerized graphics system comprising: host computer system means for generating a masked direct frame access data structure; graphics subsystem means; and bus means interconnecting said host computer system means and said graphics subsystem means for transmitting said data structure from said host computer system means to said graphics subsystem means.

In a preferred embodiment of the present invention there is provided a system and method for efficiently transferring graphics information from a host computer process complex to a graphics subsystem in which rendering and final pixel data is generated by the host system.

A masked direct frame buffer access (DFA) operation is provided, which, in a preferred embodiment, provides an assist for 3D rendering performed by the system processor of the host and other system resources. Storage of depth, alpha, stencil, and other pixel data are provided for in system or main memory of the host computer, including one or more ancillary graphics buffers associated therewith. The main processor(s) of the host system generates pixel data associated with an image. This data is checked against the buffers prior to transfer to a graphics subsystem over a bus. As a result of such checking, a mask is generated by the host system which will be transferred to the graphics subsystem in combination with pixel data, such mask providing a simplified composite of the ancillary buffer checks performed by the host.

In a particularly preferred embodiment of the present invention, the most significant bit of the mask controls update of the first, e.g., most significant, pixel of data following the mask. Each subsequent mask bit controls the update of the next sequential pixel. Accordingly, a DFA command is provided for in the system which, in a preferred embodiment, is of the format **[address of first pixel] [count of number of pixels transferred between host and graphics subsystem] [mask(s)] [pixel data(s)].** Thus, in order to update, as an example, pixels (0,0), (4,0), and (8,0) to a frame buffer component of the graphics subsystem employing the aforementioned DFA command in accordance with the invention, the host system will simply communicate the address of the first pixel (0,0), the pixel data, and the mask (10001) and the count over the bus, such as a PCI bus interconnecting the host and graphics subsystems. Significant increase in efficiency of transfer of graphics data between the host and graphics subsystem are thereby effected by only requiring transfer of address of the first pixel, thereby avoiding the address overhead associated with otherwise transferring addresses associated with each pixel. Moreover, in the graphics subsystem, this mask is employed to determine a subset of the pixel rendering data thus previously transferred to the graphics subsystem, such subset of pixels thereby being written to a frame buffer of the graphics subsystem for subsequent display on an associated graphics output device interconnected to the graphics subsystem.

It will be appreciated that the present invention extends to an article of manufacture having program code means for causing the generation, transmission, and processing of graphics data, said article of manufacture comprising: program code means for generating a masked direct frame buffer data structure; program code means for transmitting said data structure; and program code means for processing said data structure to yield a graphics display.

It will also be appreciated that the present invention extends to a data structure residing in a recorded media for use in a computerized graphics system comprising: a masked direct frame buffer access data structure.

A preferred embodiment of the present invention will now be described, by way of example only, with reference to the accompanying drawings, in which:
Fig. 1 is a block diagram of a digital computer system including the mechanism for efficient transfer of graphics information in accordance with invention;
Fig. 2 is a detailed block diagram of portions of the graphics adapter portion of Fig. 1;
Fig. 3 is a schematic illustration of the addressing format for masked direct frame buffer addressing;
Fig. 4 is a detailed illustration of the masked DFA definition in accordance with a preferred embodiment of the invention;
Fig. 5 is a flow diagram illustrating the flow of operation of the components of Fig. 1 in accordance with the invention; and
Fig. 6 is a conceptual illustration of the operation of the components of the invention.

In computerized graphical imaging systems, enhanced capability is continuously sought after in terms of more pixels per image, increased color resolution, full motion video, and the like. This in turn contributes to the serious problem of being able to efficiently transfer increasingly large amounts of information over a bus of limited bandwidth interconnecting the host system and graphics subsystems. The desire for additional features provided by associated depth, alpha, etc., buffers and associated checking, and the problem of efficient transfer of graphics information between the host computer and graphics subsystem is even further exacerbated by the need to maintain the address information related to this checking on a per pixel basis. Bus bandwidth limitations preclude transfer of individual pixel addresses across the bus which would appear necessary for identifying in the graphics subsystem which pixels will not be displayed as a result of the host checks against the ancillary buffers.

Accordingly, a transfer method was highly sought which could send the results from the system memory's checks against the ancillary buffers and the color data relating to each pixel to a graphics subsystem while at the same time minimizing the address overhead.

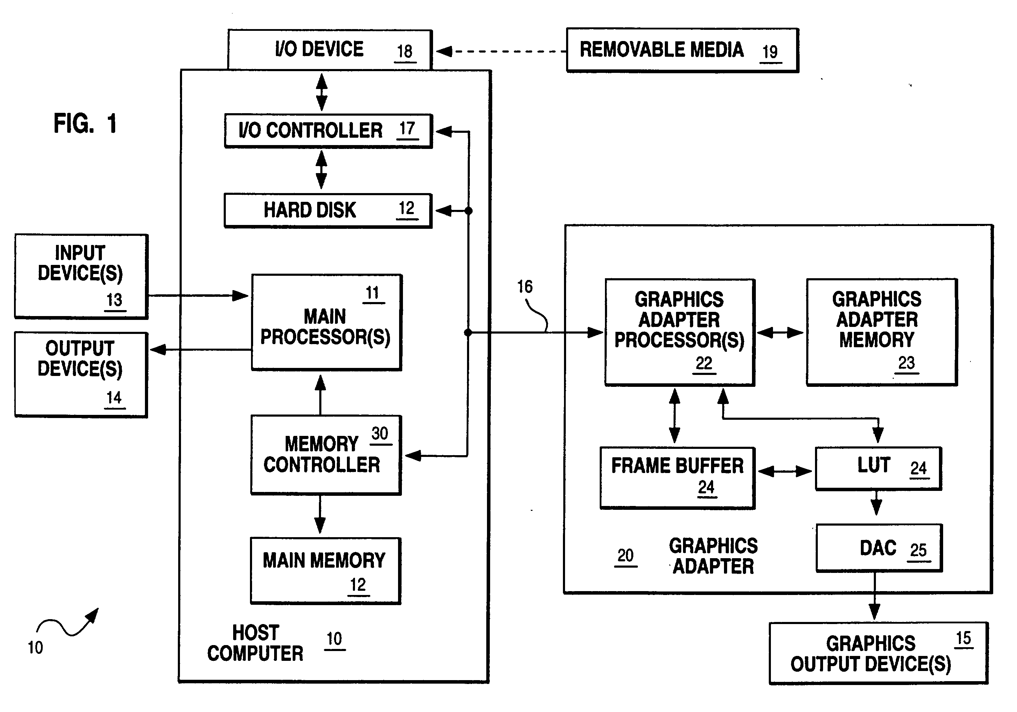

Fig. 1 is a block diagram of a digital computer system 10 employed in a preferred embodiment of the invention. Such computer may take the form of a workstation such as the RISC-based systems marketed by the IBM Corporation, although the invention is not intended to be so limited and is equally applicable to essentially any computer system employing a graphics subsystem for purposes of display of graphics information.

Still referring to Fig. 1, the computer includes one or more main processors 11, coupled to a main memory 12, and a hard disk 12A of the host 10A. Conventional input and output devices 13 and 14, respectively, are attached to the host. Such input devices may include a keyboard, mouse, tablet, or other types of input devices. Output device(s) 14, may include a text monitor, plotter, or other well known output devices. A computer readable removable media 19, such as a familiar diskette or compact disk, may be inserted into the input/output device 18, such as a disk drive or CD ROM drive. Data is read from or written to the removable media by I/O device 18 under control of the I/O device controller 17. The I/O device controller communicates with the main processor(s) through a bus 16. Main memory 12, hard disk 12A, and removable media 19 are all referred to as "memory" for storing data for processing by main processor(s) 11.

The main processor 11 is also coupled to a suitable graphics output device(s) 15, such as a graphics display through a graphics subsystem which, in a typical embodiment, may be comprised of a graphics adapter 20 or other appropriate graphics subsystem form function. The graphics adapter 20 receives instructions regarding graphics from the main processor 11 on bus 16. The graphics adapter then executes these instructions with a graphics adapter processor(s) 22, coupled to a graphics adapter memory 23. It will noted that this graphics adapter memory 23 is often associated with higher-end graphics subsystems providing enhanced graphics functionality, and that in other systems, necessity for such dedicated graphics adapter memory 23 may be obviated. The graphics processors 22 in the graphics adapter are essentially the graphics rendering engine which execute the instructions received over the bus from the main processor and, as a result, update one or more frame buffers 24 based on execution of those instructions. The frame buffers 24 are essentially video random access memory (VRAM) with fast access time. They are used to store data for every pixel to be displayed on the graphics output device, with a lookup table (LUT) 24A, containing a palette of colors referenced by the data in the frame buffer 24. A DAC (digital-to-analog converter) 25 converts the digital data stored in the frame buffer(s) into appropriate signals such as the familiar "RGB" video signals, which are then provided to the graphics display 15, thereby resulting in the visual display of the desired graphics output from the main processor. Conventionally, the LUT 24A and DAC 25 comprise a random-access-memory digital-to-analog convertor or "RAMDAC".

It is a significant feature of the invention that the host system 10A further includes a memory controller 30 interconnected to the main processor 11 and main memory 12 and the bus 16 for purposes of controlling the processing and storage of the graphical information residing in the main memory 12 which is associated with pixels to be displayed. More particularly, as will be hereinafter described in greater detail, an important function of this memory controller is to control the "checking" of graphics data against various ancillary buffers which, in turn, contain information which will, in turn, control which pixels are to be rendered and displayed, and the manner in which this is to be done. The checking function of the memory controller 30 may typically be implemented in a separate hardware chip although it could be implemented in software.

As a passing example of use of ancillary buffers, a "depth" or "Z" buffer may be included in the main memory 12. When a given pixel of an image is being processed, the system 10 may be called upon to determine if there is an object in the foreground obscuring the visibility of this pixel so as to provide the illusion of depth of an image (wherein the pixel may desirably not be displayed by reason of presence of another image between that pixel's image and the viewer) . Accordingly, one such form of "checking" which is performed by the main processor 11 in conjunction with the memory controller 30 and main memory 12, is to check this Z buffer in the main memory 12 at a location corresponding to the location of the given pixel. This check is to determine if there is in fact another pixel associated with another image at that same location which would obscure the viewing of the original pixel. This ancillary buffer checking will be described in greater detail later.

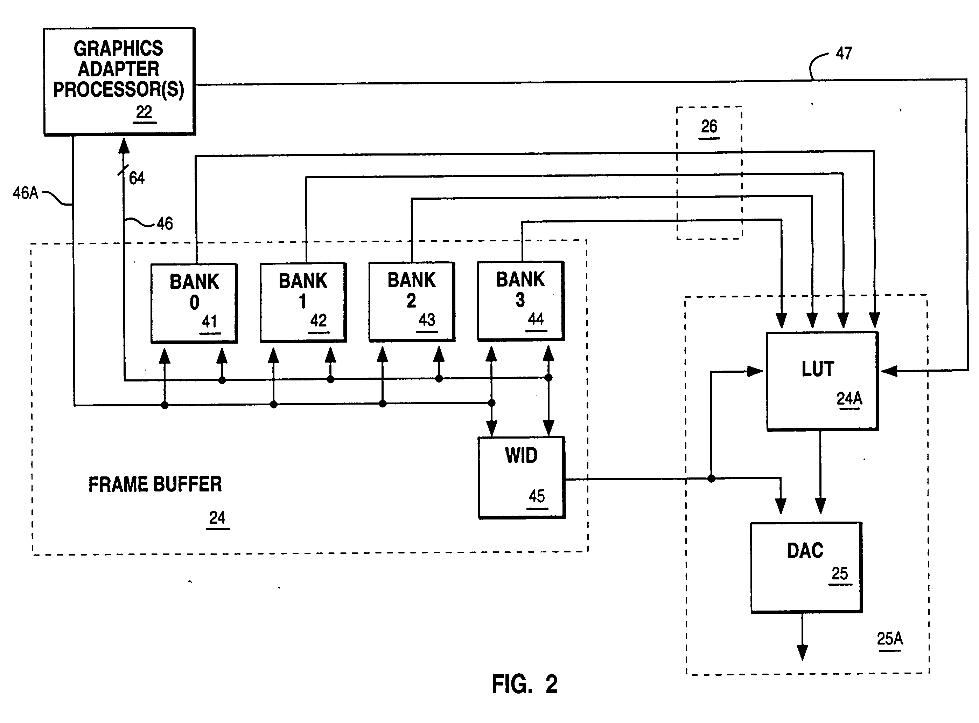

Turning now to Fig. 2, as previously noted the present invention is desirably implemented in a preferred embodiment in conjunction with a graphics adapter 20 shown in Fig. 1. Fig. 2 is a detailed block diagram of portions of the graphics adapter 20 described above with reference to Fig. 1. These portions of the graphics adapter 20 comprise a graphics processor 22, frame buffer memory 24, and RAMDAC 25A. The frame buffer 24, in a typical embodiment, will further include multiple memory banks such as banks 0-3 (reference numerals 41-44, respectively, which may be referred to hereinafter as memory banks 0-3) . Also included in the frame buffer preferably is a window identifier memory (WID) 45. The graphics processor 22 is connected to the memory banks 0-3 and the WID 45 of the frame buffer 24 by an appropriate interface bus 46 and pixel address bus 46A. The memory banks are used for storing pixel data to be displayed on the screen of the graphics output device 15. The pixel data is updated by the graphics processor via the bus interface 46, based upon addresses provided across the pixel address bus 46A.

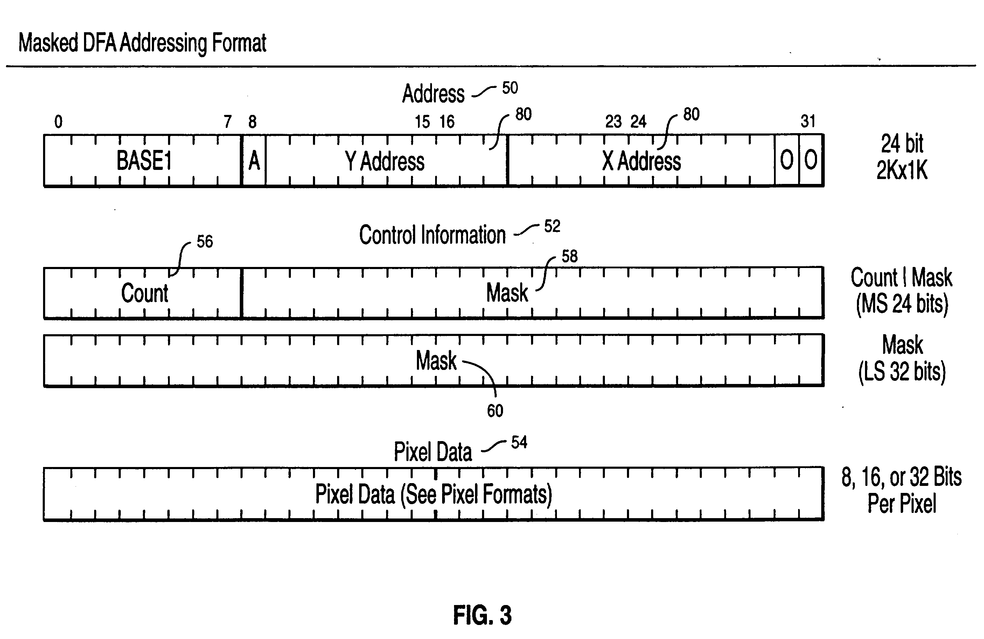

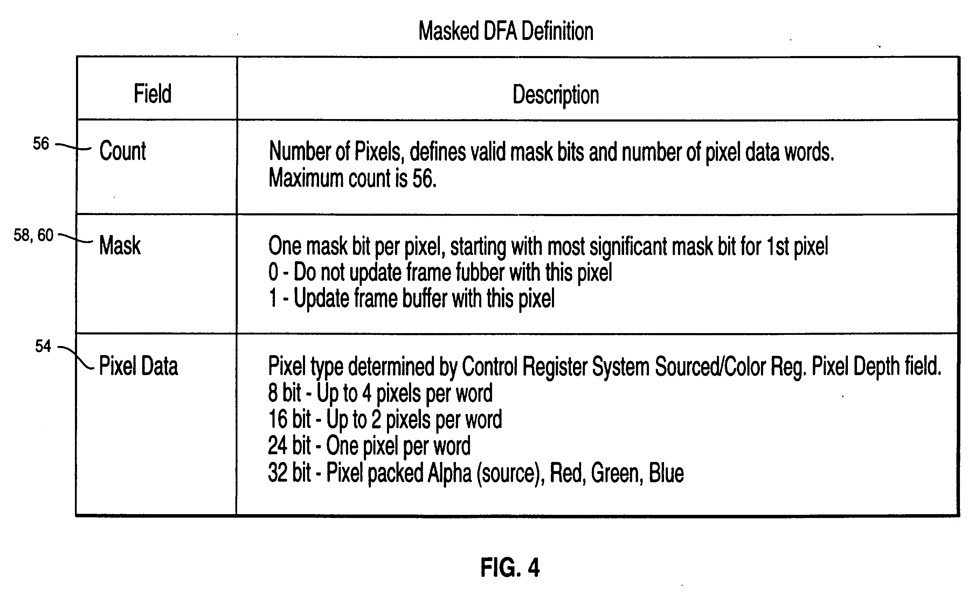

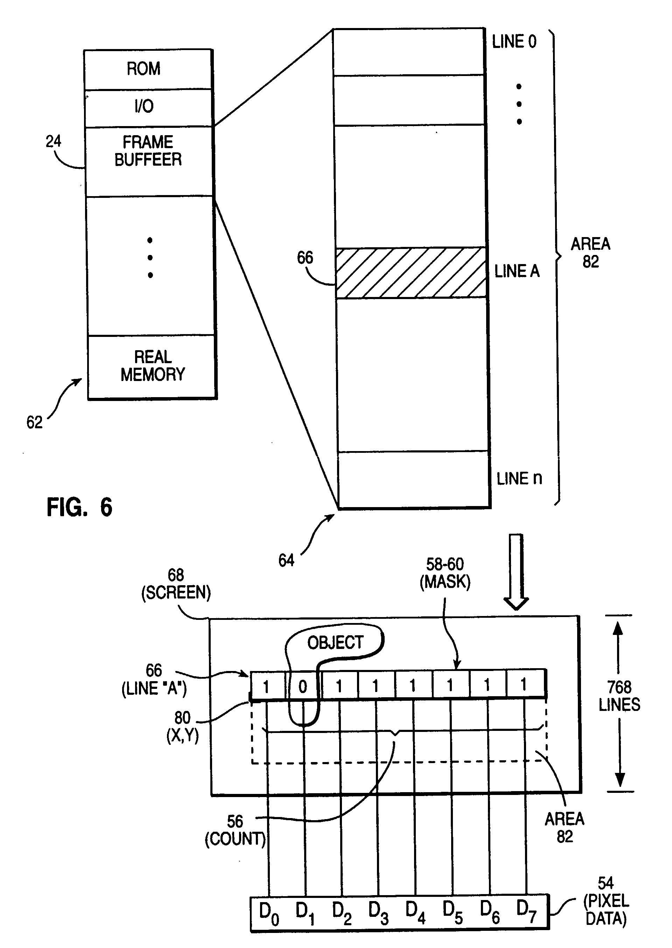

The details of the masked DFA addressing format will be described in greater detail with reference to Figs. 3 and 4. However, in order to more easily understand generally the operation of the invention, before getting into details of the address and format implementation of Figs. 3 and 4, reference is herein made to Fig. 6 which is a conceptual drawing illustrating how the invention works.

A representative system memory map, 62, reflects the various components of memory in a typical computerized graphics station. Thus, for example, read only memory (ROM) is shown which typically includes, for example, initial program load or boot code; real memory 12 is also shown represented corresponding to the main memory of the host computer in Fig. 1; and a section of the memory map is reserved for the frame buffer 24, also shown in Fig. 1. To the right of the system memory map 62 is a graphic depiction conceptually illustrating an expansion of the frame buffer 24 portion of the system memory map 62. The frame buffer at a given time will be comprised of a plurality of sections of the buffer, each associated with a unique line number on a graphics display such as the screen 68 shown in Fig. 6. A typical display might contain, for example, 768 such lines of pixels, each line in turn being comprised of, for example, 1024 pixels. For illustrative purposes, a line "A", 66, is depicted in the middle of the frame buffer expansion 64, which may also be seen conceptually illustrated in the representation of the display screen 68.

Also, for purposes of illustration, it may be assumed that an object 70 is present in the foreground which would obscure the view of image information associated with a pixel lying under the box 72. It will be recognized that this corresponds to "depth" information which may be contained in a Z buffer stored in the main memory 12 of Fig. 1. The line "A" may be seen to correspond to a plurality of horizontal pixels conceptually depicted by the horizontal line of squares in the middle of screen 68.

It will be recalled from the foregoing description that the main processor 11 will check these ancillary buffers such as the depth or Z buffer in main memory 12 and accordingly determine that although a pixel associated with the image beneath box 72 may be rendered, nevertheless (because of the presence of object 70 in the foreground at box 72), the actual pixel associated with the rendering will be obscured and thus never displayed on the graphics output device 15. It is a significant feature of the invention, however, that in order to effect the avoidance of display of this underlying pixel under box 72, it is not necessary to transfer over the bus 16 the unique address associated with this pixel 72 from the main processor 11 to the graphics adapter 20. This avoidance of transmitting unique addresses associated with each pixel of line A for example, results in significant gains in efficiency in transfer of graphics information across the limited-bandwidth bus 16 as will become more apparent with the following description.

Still referencing Fig. 6, in doing the ancillary buffer checking on the host with the main processor 11 in conjunction with the ancillary buffers contained in the main memory 12, the main processor 11 will generate a mask 82. This mask is, in fundamental concept, a series of 1's and 0's which indicate whether a pixel associated with each position in the mask will be displayed or not. Accordingly, in the very simplified illustration of Fig. 6, it will be noted that a "0" is present in the mask 82 at the position associated with the pixel box 72. This signifies that this particular pixel underlying the box 72 will not be displayed because its view is obstructed by presence of the object 70 which overlays the area delineated by the box 72. The original pixel under box 72 would otherwise be displayed but for the presence of the object 70.

Thus, in accordance with the invention, this mask 82 will be generated by the main processor 11 as a result of the ancillary buffer checking, and will be transmitted over the bus 16 to the graphics adapter 20. As will become more apparent later, it is this mask which allows for omission of pixel data transmitted within the bus burst structure on the final display 15.

Also in accordance with the invention, the main processor 11 will transmit over the bus 16 to the graphics adapter 20 a few other important parameters necessary to display the plurality of lines which will comprise the area 82 of the display screen 68 in Fig. 6. First, the starting address corresponding to the initial X,Y coordinate 80 of the first pixel of line A(66) will be transmitted. Secondly, a pixel count 56 will be transmitted functionally related to the number of pixels associated with the line to be displayed. Also, pixel data resulting from the rendering of the pixels performed by the main processor 11 will be transmitted over the bus, as conceptually shown by the data box 54. It will be noted that pixel data uniquely associated with each pixel will comprise the data 54. Thus, for example, the main processor 11 will transmit pixel data "D2" associated with a corresponding pixel which has, in turn, a corresponding bit in the mask 58-60. Additionally as aforementioned, the mask 58-60 will be transmitted by the main processor 11 to the graphics subsystem wherein a bit is provided associated with each pixel to be displayed.

A very important feature must be noted with respect to the selection of the parameters to be transmitted, as illustrated in Fig. 6, e.g., the starting X,Y coordinate 80, count 56, mask 58-60, and pixel data 54. It will be noted that only one address has been transmitted over the bus 16 associated with the image data which will comprise the line, specifically the starting address X,Y of line A. As is conventionally known in the art, in a burst mode of transmission on the bus 16, because count data 56 is also transmitted in conjunction with this starting address of the first pixel only, the graphics subsystem may assume that each successive instance of pixel data D0.....D_{N} will have have associated with it an address location incremented by a predetermined constant value relative to the address of the immediately preceding pixel data. In other words, if the graphics adapter processor 22 knows that the first pixel in line A is at the X,Y coordinate 0,0, it may, for purposes of illustration, assume that the next incoming pixel data will be associated with the immediately adjacent pixel located at the coordinate 1,0 and that this pixel will thus have a memory address location of the preceding 0,0 pixel incremented by 1.

In addition to the fact that, in accordance with the invention, unique addresses need not be transmitted over the bus 16 associated with each and every pixel, it is an extremely important feature of the invention that the main processor generates the mask 58-60 and transmits it over the bus 16. This enables the graphics subsystem to employ this mask for purposes of determining which of the pixels rendered by the main processor 11 and transmitted over the bus 16 will in fact be loaded into the frame buffer 24 and ultimately displayed on the graphics output device 15.

Now that an overall understanding has been gained of the operation of the invention, more detail will be provided as to the particular preferred embodiment and, more specifically, the addressing format of masked DFA in a practical implementation.

Referring back to Fig. 3, depicted therein is a schematic illustration of a typical addressing format in accordance with the invention. The masked DFA operation of the invention in the embodiment under discussion will have particular utility in providing an assist for 3D rendering performed by the system processor 11 and other system resources. As aforementioned, the storage of depth, alpha, and other pixel data as required may be provided in the system memory 12. Pixel data generated by the processor 11 will be checked against these buffers as necessary before being transferred to the graphics subsystem 20. The results of this checking will form control information 52 and, more importantly, formation of the mask 58-60 will be transferred with the pixel data across the bus 16. The masked DFA structure supports the update of sequential pixel data to the frame buffer 24, dependent upon the value of the mask at specific locations therein. Preferably the pixels will be sequential in increasing X address. In the embodiment under discussion, the mask will cover typically a span of up to 56 pixels. The most significant bit of the mask will control update of the first pixel (e.g., the most significant pixel) of data following the mask. Each subsequent mask bit controls the update of the next sequential pixel. All unused mask bits in the embodiment under discussion will be set to 0, and unused mask bits will be those not covered by the count. The pixel data type contained in the masked DFA operation will be of course determined by the graphics subsystem itself, such as the control register system sourced/control register pixel depth field. Pixel processing may be performed on the pixel data in the masked DFA operation as desired.

With reference to Fig. 4, additional details regarding a masked DFA definition are depicted. First, the count, 56, also shown in Fig. 6, will specify the number of pixels, associated with the mask. Also, in an actual preferred embodiment of the mask 58-60, in practice it will desirably be comprised of a most significant 24 bit portion, 58, followed by a least significant bit portion of 32 bits, reference numeral 60, Fig. 3, the combination of which results in the 56 bit mask. As previously described, this mask will start with the most significant mask bit for the left most pixel. A "0" in the mask signifies an instruction for the graphics adapter processor(s) 22 to not update the frame buffer 24 with the corresponding pixel; similarly, a "1" in the mask signifies that the frame buffer will be updated with this pixel. In the implementation under consideration, wherein pixel data may be comprised of 8, 16, or 24/32 bits per pixel, up to 4 pixels per word may be provided for 8 bit pixel data; up to 2 pixels per word for 16 bit data, 1 pixel per word for 24 bit data; and pixel-packed alpha (source), red, green, blue, for 32 bit information.

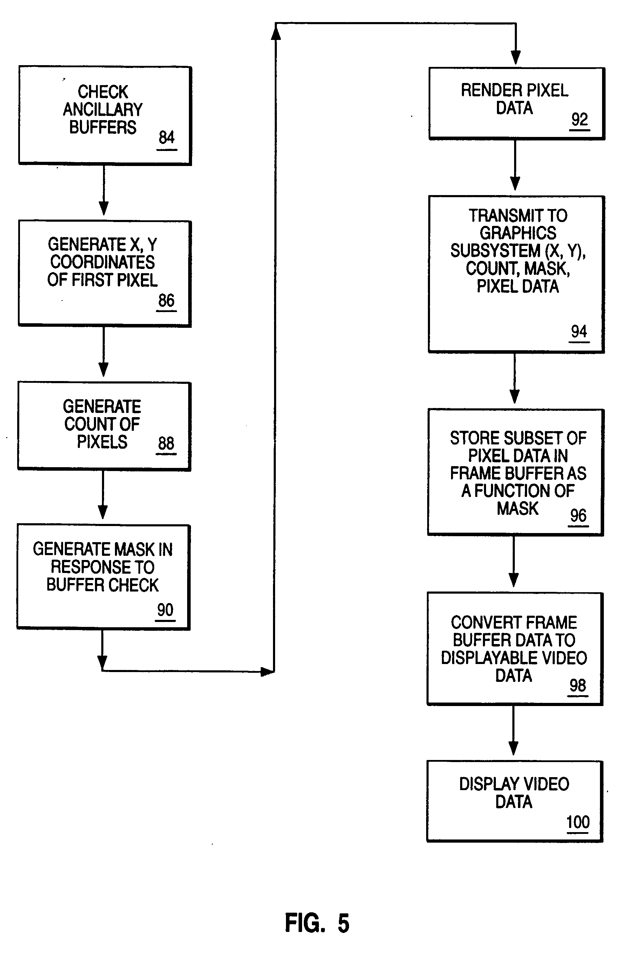

Referring to Fig. 5, depicted therein is a simplified high level flow diagram of operation of the invention wherein, block 84 represents the first step wherein the main processor 11 of the host computer executes the "Z" or depth checks and other checks against the ancillary buffers contained in the main memory 12. As a result of the buffer checking and rendering, the processor 11 determines which pixels of a pixel set will be rendered. The address 50 (Fig. 3) of the first pixel of the pixel set for which information will be transferred across the bus will be generated, shown at block 86. Next, the processor 11 will generate a count of the pixel information to be transferred, shown at block 88 (see Fig. 3, reference numeral 56 in the addressing format diagram). The main system processor 11 will thereafter, again in response to this ancillary buffer checking of block 84, generate the appropriate mask component of the control information 52 of Fig. 3 - specifically the masks 58 and 60. This step is shown in Fig. 5 at block 90. The pixel data 54 (Fig. 3) will also be generated by the main processor 11 such that the pixels may be rendered, shown at block 92.

Finally, once the necessary components of the data structure of Fig. 3 have been generated in accordance with the invention, they will be transmitted across the bus from the host to the graphics adapter, shown at block 94, Fig. 5 in a burst mode. Specifically, the previously generated X,Y coordinate of the first pixel, the pixel count, mask, and pixel data shown in Fig. 3 will be transmitted across the bus to the graphics adapter processor 22 in the graphics subsystem such as the graphics adapter 20.

The graphics adapter processor will then operate upon the information thus transmitted across the bus so as to cause storing of pixel data in the frame buffer 24 as a function of this data, and, in particular, as a function of the mask. This step is shown in Fig. 5 at block 96. Next, in a conventional manner, the thus-stored pixel data in the frame buffer 24 is converted to video data format, block 98, by use of the RAMDAC 25A (Fig. 2) whereupon this video data is then utilized to effect the desired visual display, block 100.

Although a particular embodiment of the invention has thus now been described, the invention is not intended to be limited to this embodiment and admits to numerous variations. For example, in a typical personal computer (as distinguished from a more high-powered workstation for example), an integrated checking function in the memory controller 30 may not necessarily be provided. Nevertheless, by utilizing the teachings of the invention regarding the data structures disclosed herein and the mask in conjunction with the burst mode across the bus and avoidance of transfer of individual addresses associated with each pixel, the benefits of the invention may nevertheless still be realized notwithstanding the fact that the checking function is provided by software.

It will also be readily apparent that although a 56 bit size mask has been illustrated in the embodiment, the invention admits to varying mask sizes as required, in accordance with considerations well known in the art. A key feature of this mask information structure regardless of its size is that it essentially is providing across the limited-bandwidth bus a composite of all the 3D type ancillary buffer checks such as the depth or Z check which the main processor 11 and memory controller 30 have performed.

While the invention has been shown and described with reference to particular embodiments thereof, it will be understood by those skilled in the art that the foregoing and other changes in form and detail may be made therein without departing from the scope of the invention.

## Claims

1. A computerized graphics system comprising:
host computer system means for generating a masked direct frame access data structure;
graphics subsystem means; and
bus means interconnecting said host computer system means and said graphics subsystem means for transmitting said data structure from said host computer system means to said graphics subsystem means.

2. The system of Claim 1 wherein said data structure includes a mask of bits each associated with a different pixel of 3D image.

3. The system of Claim 2 wherein said graphics subsystem means includes
frame buffer means; and
graphics processor means interconnected to said frame buffer means causing storage in said frame buffer means of representations of pixels as a function of said data structure.

4. The system of Claim 3 wherein said graphics processor means further includes means for causing storage, as a function of said mask, of a subset of a set of pixel data transmitted over said bus.

5. The system of Claim 4 wherein said host computer system means includes at least one ancillary buffer means for storing information relating to a
three-dimensional image; and
memory controller means interconnected to said buffer means for examining said buffer means and generating said mask in response to said examining.

6. The system of Claim 5 wherein each said bit of said mask indicates whether or not a corresponding said different pixel from said set of pixel data is to be stored in said frame buffer means of said graphical subsystem means.

7. The system of Claim 1 wherein said data structure comprises an X,Y address of a first pixel represented in said set of pixel data, a count of pixels in said set of pixel data, said mask, and said set of pixel data.

8. A graphics subsystem comprising:
graphics adapter memory means for storing a direct frame access data structure;
frame buffer means; and
graphics processor means interconnected to said graphics adapter memory means and said frame buffer means; said graphics processor means including
means for retrieving said data structure from said graphics adaptor memory means;
means for operating upon a set of pixel data in response to said retrieved data structure to generate a subset of said pixel data; and
means for storing said subset of pixel data in said frame buffer means.

9. The graphics subsystem of Claim 8 wherein said data structure includes a mask uniquely defining said subset of pixel data.

10. The graphics subsystem of Claim 9 wherein said data structure is comprised of an X,Y address of a first pixel represented in said set of pixel data, a count of pixels in said set of pixel data, said mask comprised of one bit per pixel of said pixel data; and said pixel data.
